# EUROPÄISCHE PATENTSCHRIFT

(11) **EP 0 662 042 B1**
(45) Veröffentlichungstag und Bekanntmachung des Hinweises auf die Patenterteilung: **08.10.1997**
(21) Anmeldenummer: 92923793.1
(22) Anmeldetag: 25.11.1992
(51) Int. Cl.: B29D 31/00, B29C 70/00, B31C 11/02

(54) **MÖBEL MIT TRAGKÖRPERN AUS KARTONLAMINAT; HERSTELLVERFAHREN UND -VORRICHTUNG**
PIECE OF FURNITURE WITH SUPPORTING BODIES MADE OF LAMINATED CARDBOARD, PROCESS AND DEVICE FOR PRODUCING THE SAME
MEUBLE MUNI D'ELEMENTS DE SUPPORT EN CARTON STRATIFIE, PROCEDE ET DISPOSITIF DE FABRICATION

(30) Priorität: 24.09.1992 DE 4231981
(43) Veröffentlichungstag der Anmeldung: 12.07.1995
(73) Patentinhaber: Steinhoff-Laminat GmbH, 37327 Leinefelde (DE)
(72) Erfinder: MOSSBECK, Niels, Grandview, TN 37337 (US)
(74) Vertreter: Hanewinkel, Lorenz, Dipl.-Phys.
(86) Internationale Anmeldenummer: EP9202716
(87) Internationale Veröffentlichungsnummer: WO9406622

(56) Entgegenhaltungen:
- WO-A-91/08885
- BE-A- 696 078
- DE-U- 8 209 206
- FR-A- 2 017 009
- FR-A- 2 307 649

## Beschreibung

Die Erfindung betrifft ein Verfahren zum Herstellen von Möbel und Möbelteilen, bei dem Karton oder kartonartiger Faserstoff mit Kaltleim beschichtet übereinandergeschichtet zu einem Laminat-Formkörper eines Möbelstückes durch Pressen verbunden und ausgehärtet wird.

Es ist aus der Gebrauchsmusterschrift DE-U1-82 09 206 bekannt, Stuhlsitze, Rückenlehnen oder Sitzschalen aus Pappe oder laminiertem Karton herzustellen, wobei aus Pappe oder Karton ausgestanzte Formteile, die mit einem Kaltkleber beschichtet sind, in eine Presse eingelegt und dort verpreßt werden, so daß sie eine der Form gemäße Sitz- oder Lehnschale bilden, sobald der Kaltleim erhärtet ist und danach die Entformung des Laminats erfolgte.

Dieses Verfahren hat den Nachteil, daß nur mäßig gekrümmte Formteile damit hergestellt werden können und die Verweilzeit bis zum Erhärten des Kaltleims relativ hoch ist, so daß die Presse und Form lange belegt ist. Außerdem entstehen Stanzabfälle im großen Anteil.

Aus der belgischen Patentschrift BE 696 078 ist ein Herstellungsverfahren und eine Vorrichtung zur Herstellung von gewickelten Formteilen bekannt, wobei ein aufgeblasener Ballon als Rohling aus einem elastischen, kompressiblen Material mit einem endlosen Faden bzw. einer Faser, deren Oberfläche mit Harz benetzt ist, umwickelt wird. Der umwickelte Rohling wird mittels aufgeheizter Gesenke in die Endform gebracht, wobei eine Vernetzung der Oberfläche stattfindet. Nach der Evakuierung des Formteiles wird dieses aus dem Gesenk herausgenommen und steht für eine Weiterverarbeitung zur Verfügung.

Es ist Aufgabe der Erfindung, ein neuartiges Verfahren zu offenbaren, mit dem Möbel und Möbelteile auch mit starken Krümmungen in kurzen Formzeiten herstellbar sind, sowie danach hergestellte neuartige Möbelteile und Möbel und eine Vorrichtung zur Durchführung des Verfahrens zu schaffen.

Die Lösung besteht darin, daß der Karton als eine Kartonbahn nach dem Leimauftragen zu einem hohlen Wickel gewickelt und anschließend zwischen inneren und äußeren Formkörpern in einem Preßschritt formgepreßt wird, wonach eine Entformung mit einer Entkörnung mit anschließendem Aushärten erfolgt.

Vorteilhafte Ausgestaltungen sind in den Unteransprüchen dargestellt. Die neuartigen Möbel und Möbelteile sowie die Vorrichtung zur Durchführung des Verfahrens sind in Nebenansprüchen angegeben.

Das neuartige Verfahren basiert auf einer Wickelbildung des zu laminierenden Karton- oder Faserstoffmaterials. Der noch nicht abgebundene Kaltklebstoff ermöglicht es, den Wickel mit Innen- und Außenpreßwerkzeugen in eine endgültige Rohlingform zu bringen, wobei eine Verfestigung und Kompaktierung der Laminatschichten erfolgt, die eine erhöhte Haftung des Kaltleims erbringt. Der Rohling ist so formstabil, daß er sofort der Presse entnommen werden kann, wonach ein endgültiges Erhärten des Kaltleims in einem Zwischenlager erfolgt. Auch ist eine Weiterverarbeitung, wie das Einbringen von Stützen und ein Aufleimen von Endverschlüssen bereits vor dem Aushärten möglich, so daß keine Addition mehrerer Aushärtezeiten auftritt.

Bei der Verformung und Pressung lassen sich im gleichen Werkzeug Schraubeinsätze, Durchbrüche und dgl. in das Material mittels pneumatisch oder hydraulisch gesteuerter Stempel einbringen soweit die Stempel und Einsetzer nicht unmittelbar in den Pressenbacken anzuordnen sind.

Die Rohlinge lassen sich, je nach den Erfordernissen mit Sägetrennschnitten aufteilen oder aufgliedern, wobei z. B. eine lattenartige Sitz- oder Lehnflächen-Unterstruktur ausgebildet wird.

Verbindungen zu Sitz- oder Verschlußstrukturen sowie zwischen mehreren Laminatteilen sind rationell mittels Klammerverbindern herzustellen, die in dem Laminat aus beliebiger Richtung eingeschossen einen hervorragenden Halt finden.

Das Laminat wird vorzugsweise aus einem groben, packpapierartigen Recycling-Karton, der aus Altpapier und/oder Altpappegrundstoff hergestellt ist, gewickelt. Auch kann Neu-Pappe oder Neu-Papier eingesetzt werden. Als Verbindungsmittel werden Kalt- oder Warmleim oder andere Leime eingesetzt. Als Kaltleim ist ein schadstofffreier Buchbinderleim, z. B. PVA, d. i. Polyvinylalkohol, gut geeignet. Für eine tragende Platten- oder Wandstruktur eines Liege- oder Sitzmöbels sind 2 bis 25 Wickellagen eines Kartons von 25 bis 1200 g/m² ausreichend.

Die Vorrichtungen zur Durchführung des Wickelverfahrens und des Preßvorganges sind zweckmäßig mehrere Meter breit, so daß je Wickelvorgang mindestens ein Liegemöbelkorpus oder mehrere Armlehnenteile herstellbar sind. Der Wickelkern besteht vorteilhaft aus einem expandierbaren Grundkörper, auf den je nach dem zu fertigenden Modell dazu passende Aufsätze aufgenommen werden. Der Wickelkern ist austauschbar in einem Ständer gehalten, der den Wickelantrieb enthält. Es können zweckmäßig zwei Wickelkerne wechselweise benutzt werden, wobei jeweils einer in die Presse verbracht wird und dann die Entformung erfolgt, während der andere bewickelt wird. Auch kann der Wickel von dem Wickelkern abgezogen und auf einen gesonderten Preßkern aufgeschoben werden, wodurch die Wickelvorrichtung fast pausenlos arbeitet.

Die Kartonbahn führt von der Vorratsrolle über eine Vorratsschleife zu einer Leimauftragswalze und von dort zum Wickler. Um ein Durchweichen der Bahn während des Austausches des Wickelkerns oder eines Wickler-Stillstandes aus anderen Gründen zu verhindern, ist eine Abnahmevorrichtung der Bahn von der Leimwalze an dieser angeordnet. Außerdem wird die Bahn mit Halteschienen vor und hinter der Leimvorrichtung angehalten, wenn der Wickelkern getauscht wird.

Es können bedarfsweise Ritzvorrichtungen über die Bahnbreite verteilt angeordnet werden, falls parallel mehrere Objekte, z. B. Armlehnteile, hergestellt werden. Ein Querrollenmesser trennt die Bahn jeweils nach der vorgegebenen Windungszahl ab.

Ist der bewickelte Wickelkern in die Presse verbracht, was mit einem Hub- und Quertransportschlitten geschehen kann, dann wird er an eine Druckluftleitung angeschlossen, so daß der Kern bis auf Endanschläge in die endgültige Innenform expandiert. Gleichzeitig pressen von mehreren Seiten Preßstempel, die mit geeignet geformten Formteilen besetzt sind, auf den Wickel. Nach wenigen Sekunden ist der Preßvorgang beendet, und die Formstempel werden zurückgesteuert sowie der Wickelkern kontrahiert. Danach wird der Wickelkern herausgezogen und in eine Wartestellung verbracht bis der nächste Wickel abgenommen ist, wonach er in die Wickelvorrichtung eingespannt wird.

An dem Wickelkern sind Steuernocken vorgesehen, die bestimmte Drehwinkel signalisieren, damit die Zuführung des Bahnbeginns, die Lage des abgeschnittenen Bahnendes sowie der Beginn und das Ende des Leimauftrages und die Öffnung der Lager zur Entnahme des Wickels stets in einer vorgegebenen Winkelposition erfolgen. Im Trennschnittbereich wird vorzugsweise kein Leim aufgetragen, damit die Formteile nicht verkleben. Der Bahnanfang wird jeweils mit einer Klemmschiene am Wickelkern festgehalten, die pneumatisch mit einem Sensor gesteuert ist.

Zur Erstellung von konvex geformten Wickeln ist jeweils eine entsprechend geformte Wickelkernbestückung mit Formteilen erforderlich und eine komplementäre Bestückung der äußeren Pressenbacken vorzusehen. Mit einer derartigen Ausrüstung lassen sich Unterstrukturen für Armlehnen von Polstermöbeln, Rückenlehnunterteile, Sitz- und Liegeunterteile einfacher Bauart erstellen. Auf diese Unterteile lassen sich bedarfsweise Zier- und Formstücke, z. B. im Handauflagebereich an den Armlehnen, aus Schaumstoff aufsetzen.

Aus einem längsgeteilten Wickel geeigneter Form lassen sich beispielsweise zwei Rückenlehnenschalen bilden, in die Polstermaterial eingesetzt wird. Ebenso lassen sich aus einem etwa rechteckigen Wickel zwei U-Winkel bilden, die jeweils als ein Sitz dienen.

Der Sitzkomfort läßt sich erhöhen, wenn die Sitzfläche gelocht oder lattenrostartig geschlitzt ist. Die Lochung wird vorteilhaft im nicht gehärteten Zustand durchgedrückt, so daß ein versteifender Wulstrand entsteht.

Das gesamte, aus den Einzelteilen zusammengeklammerte Grundgestell wird vorteilhaft mit einem Polsterbezug, der innen mit Polstermaterial besteppt ist, bezogen. Hierdurch wird ein formschönes, bequemes und stabiles Polstermöbel mit relativ wenig Arbeitsaufwand geschaffen, das aus umweltfreundlichem Material besteht, das zum großen Teil recyclet ist und wieder vollständig recyclebar ist.

Eine weitere vorteilhafte Ausgestaltung der Möbelrohteile wird dadurch erreicht, daß der Wickelkern oder ein gesonderter Preßkern eine oder mehrere Ausnehmungen aufweist, zu denen die Presse komplementär mit Preßbacken bestückt ist. Die Wickelkernausnehmung(en) ist (sind) jeweils mit einer gesteuert anstellbaren und einziehbaren Stütze bestückt, über die der Wickel ausgebildet wird.

Diese Stütze kann beispielsweise ein aufblasbarer Schlauch sein, der während des Preßvorganges entleert wird. Die Stütze ist jeweils so weit ausgestellt, daß der darüber gespannte Wickelbereich in die Ausnehmung paßt, wenn die Presse ihn eindrückt. Auf diese Weise entstehen konkave Formen, z. B. die innere Lehnensitzpartie eines Polstermöbels. Die einstückige Form erspart den Verbindungsarbeitsgang, Versteifungsmaterial und somit auch Gewicht.

Entkernt man den Wickel unmittelbar nach seiner Fertigstellung und steckt in ihn einen geeignet gestalteten Preßkern, so lassen sich komplexe, konkave und konvexe Formen aus dem noch formbaren Wickel pressen. Wenn der Preßkern kürzer als der Wickelkern ausgebildet ist, lassen sich auch Abkantungen an den Stirnseiten des Wickels sowie Zwickelfalten in den Eckbereichen anbringen. Dies ergibt sehr steife Schalenformen.

Weiterhin lassen sich dekorative Formen, z. B. von Rückenlehnen herstellen, indem schmale stumpfe Preßstempel Falten in enge schlitzartige Vertiefungen eindrücken. Hierdurch lassen sich z. B. seitliche Absenkungen der Rückenlehnenoberkante herstellen ebenso wie Faltenverformungen in der dritten Dimension, die über die begrenzte Preßverformung hinausgehen.

Die neue Technik der Erfindung hat ein hochverdichtetes Faser-Laminat (HDF) geschaffen.

Vorteilhafte Ausgestaltungen sind anhand der Figuren 1 bis 12 beschrieben.
- Fig. 1: zeigt den Verfahrensablauf schematisiert,
- Fig. 2: zeigt eine Wickelvorrichtung schematisiert im Querschnitt,
- Fig. 3: zeigt eine Presse schematisiert im Querschnitt,
- Fig. 4: zeigt eine weitere Ausführung des Wickelkernes mit Wickel,
- Fig. 5: zeigt eine weitere Ausführung der Pressen zu Fig. 4,
- Fig. 6 und 7: zeigen weitere Wickelkernbestückungen,
- Fig. 8: zeigt ein Polstersitzmöbel im mittleren Vertikalschnitt,
- Fig. 9: zeigt den Rohling von zwei Rückenlehnstützen vor dem Schnitt,
- Fig. 10: zeigt ein Polstersitzmöbel im mittleren Vertikalschnitt zweiter Art,
- Fig. 11: zeigt ein Polstersitzmöbel in Frontansicht ohne Bezug schräg von oben,
- Fig. 12: zeigt den Grundkörper eines Liegemöbels im Vertikalschnitt.

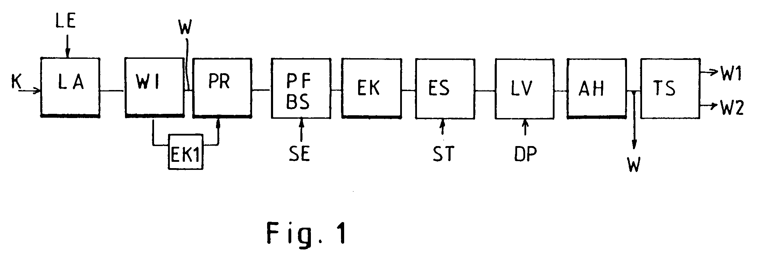

Fig. 1 zeigt den Verfahrensablauf zur Herstellung der Möbelkonstruktionsteile. Dieser besteht in seinen Kernschritten aus dem Leimauftragen (LA) des Leimes (LE) auf den Karton (K), dem Wickeln (WI) der Kartonbahn (KB), dem Pressen (PR) des Wickels (W), dem Entkernen (EK) sowie Entformen und dem Aushärten (AH) desselben. Hierzu tritt ggf. beim Pressen (PR) ein Perforieren (PF) und/oder ein Bestücken (BS) des Wickels (W) mit Ankern, Dübeln, Schraubeinsätzen (SE) od. dgl.. Weiterhin kann bereits vor dem Aushärten (AH) ein Einsetzen (ES) und Einschließen von Streben (ST) sowie ein Verleimen (LV) und Anschließen von Deckplatten (DP) auf den Wickel (W) erfolgen.

Der Wickel (W) wird vorzugsweise nach dem Aushärten (AH) ggf. in mehrere Teile (W1, W2) in einem Trennschritt (TS) zerteilt. Weiter kann ein Einschneiden (85) von Säge-Spaltschnitten u. ä. erfolgen. Der Wickel (W) kann alternativ in einem ersten Entkernschritt (EK1) abgezogen und auf einen separaten Pressenkern aufgeschoben werden.

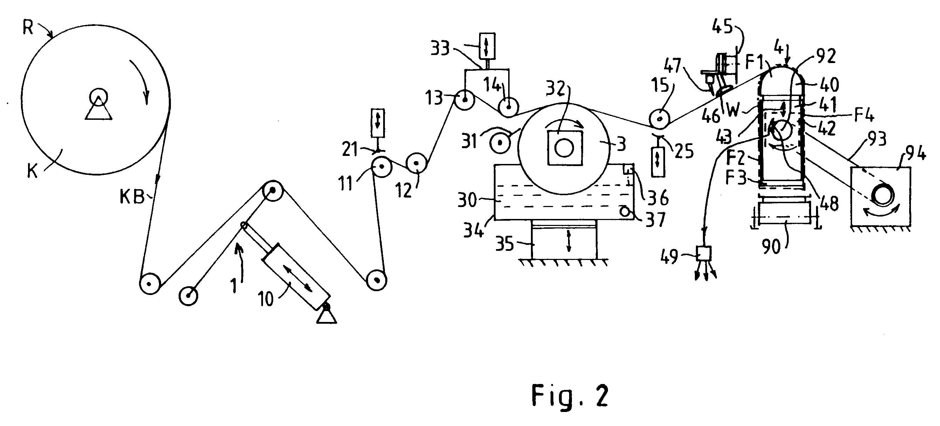

Fig. 2 zeigt eine schematisierte Wickelvorrichtung im Querschnitt. Der Karton (K) wird von einer Vorratsrolle (R) als Kartonbahn (KB) abgewickelt und über einen Bahnspanner (1) geleitet, der dieser stets eine Vorspannung über einen Druckluftzylinder (10) verleiht, und beim Stillstand des Wicklers eine Vorratsschleife bildet, bis die Vorratsrolle (R) von der Schleifenbildung gesteuert zum Stillstand kommt. Auch durch die im allgemeinen unrunde Kontur des Wickels (W) entstehen bei konstanter Drehgeschwindigkeit Längenschwankungen der freien Kartonbahn (KB), die der Bahnspanner (1) abfängt, ohne daß die Vorratsrolle (R) beschleunigt und abgebremst werden muß. Zusätzlich ist der Wickler (4) an Schwenkarmen (93) gehalten, deren Schwenkantrieb (94) einen Längenausgleich besitzt.

Die Kartonbahn (KB) ist über mehrere Umlenkrollen (11 bis 15) geführt, von denen die erste und die letzte mit steuerbaren Halteleisten (21, 25) zusammenarbeiten, die die Kartonbahn (KB) festhalten, wenn der Wickelkern (4) nicht gedreht wird. Zwischen zwei der Umlenkrollen (14, 15) ist eine Leimauftragwalze (3) angeordnet, die untenseitig in ein Leimbad (30) eintaucht und diese drehend verlassend eine Rakel (31) passiert und dann oben die Kartonbahn (KB) beleimt. Die Drehrichtung und -geschwindigkeit der Leimauftragwalze (3) entspricht in etwa deren der Kartonbahn (KB). Hierzu ist ein über ein Stellgetriebe regelbarer Walzenantrieb (32) an die Walze (3) angeschlossen, der sein Sollsignal von der abwärts gelegenen Umlenkrolle (14) bekommt. Alternativ ist ein langsamer Antrieb mit einem Freilauf vorgesehen, der einen Mitlauf mit der Bahn gewährt. Die beiden abwärts der Leimauftragswalze (3) liegenden Umlenkrollen (13, 14) sind mit einer Abhebevorrichtung (33) verbunden, die bei stillstehender Kartonbahn (KB) diese von der Leimauftragwalze (3) abhebt. Hierbei wird der Walzenantrieb (32) mit der zuvorigen Drehgeschwindigkeit weiterbetrieben, was ein Antrocknen des Leimes auf der freien Oberfläche verhindert.

Das Leimbad (30) wird mit einem Pegelmesser (36) und einem Viskositätsmesser (37) gesteuert permanent in seinem Pegelstand durch ein geregeltes Nachfüllen auf ein vorgegebenes Niveau gehalten, und die Viskosität wird ständig geprüft und durch Zugabe von verbrauchter Flüssigkeit stabilisiert. Der Leimbadbehälter (34) ist auf einer Hubvorrichtung (35) angeordnet, so daß er zur Reinigung abgesenkt werden kann.

Der Beleimungsvorrichtung folgt der Wickelkern (4) mit dem Wickelkernantrieb (42). Der Wickelkern (4) besteht aus zwei gegeneinander in Grenzen verschieblich gehaltenen Kernstücken (40, 41), die mit austauschbaren Formteilen (F1 bis F4) besetzt sind, deren außengelegenen Flächen die Innengestalt des Wickels (W) bestimmen. Die beiden Kernstücke (40, 41) sind über einen pneumatisch betätigten Exzenter (43) auseinanderzupressen und mit Federn zusammengezogen. Die beiden Achslager (44) des Wickelkerns (4) sind geteilt und pneumatisch gesteuert zu öffnen, so daß der Wickel (W) mit dem Wickelkern entnehmbar und in die Presse zu befördern ist. Der Wickelkernantrieb (42) befindet sich zwischen einem Doppellager (92), das ein freies Tragen des Wickelkernes (4) mit dem Wickel (W) ermöglicht, so daß nach dem Abschwenken des Lagers (1) am anderen Wickelkernende dort der Wickel (W) abgezogen werden kann, wozu eine Wickelabzugsvorrichtung (90) dient. Die Wickelkernlager (91, 92) sind um eine gemeinsame Achse (95) schwenkbar, so daß der Schwenkantrieb (96) der Kartonbahn (KB) bei konstanter Wickelgeschwindigkeit einen konstanten Zug ausübt und mit gleichem Vorschub.

Vor dem Wickelkern (4) ist ein Querschneider (45) angeordnet, an dessen Laufbahnträger die Kartonbahn (KB) mit Saugnäpfen (46) von oben gehalten wird, während ein fertiger Wickel (W) entfernt wird bis ein frischer Wickelkern (4) eingesetzt ist. Außerdem sind auf dem Schneidwerkträger steuerbare Kerbmesser (47) seitlich verschiebbar und feststellbar aufgesetzt, die einer Längsschlitzung der Kartonbahn (KB) dienen wenn mehrere Teile parallel hergestellt werden. Die Steuerung des Querschneiders (45), der Halteleisten (21, 25), der Saugnäpfe (46) und der Abhebevorrichtung (33) erfolgt über einstellbare Steuernocken (42) an der Wickelkernachse in Verbindung mit einem Windungszähler (49).

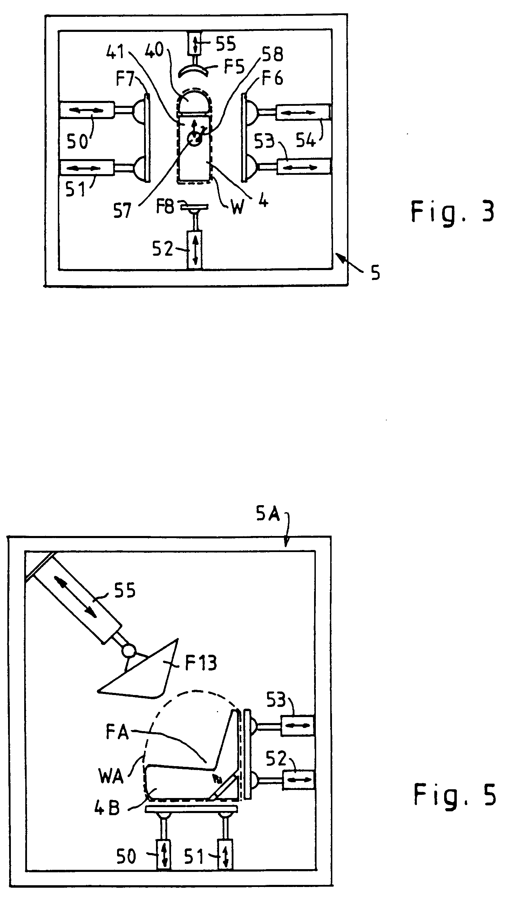

Fig. 3 zeigt einen Querschnitt einer schematisierten Presse (5) mit den in einem Rahmen angeordneten Hydraulik oder Preßluftdruckzylindern (50 bis 56), die um den in eine Zentrallagerung (57) einzusetzenden Pressen- oder Wickelkern (4) mit dem Wickel (W) an allen Seiten angeordnet sind. Die Preßluftstempel tragen Formteile (F5 bis F8), die komplementär zu den inneren Formteilen (F1 bis F4) gestaltet sind. An dem Zentrallager (57) befindet sich ein Druckluftanschluß (58), der die Kernstücke (40, 41) gegen den Wickel (W) und die äußeren Preßbacken expandiert und nach dem Abzug der Preßbacken wieder entspannt, so daß der Wickel (W) abgezogen werden kann.

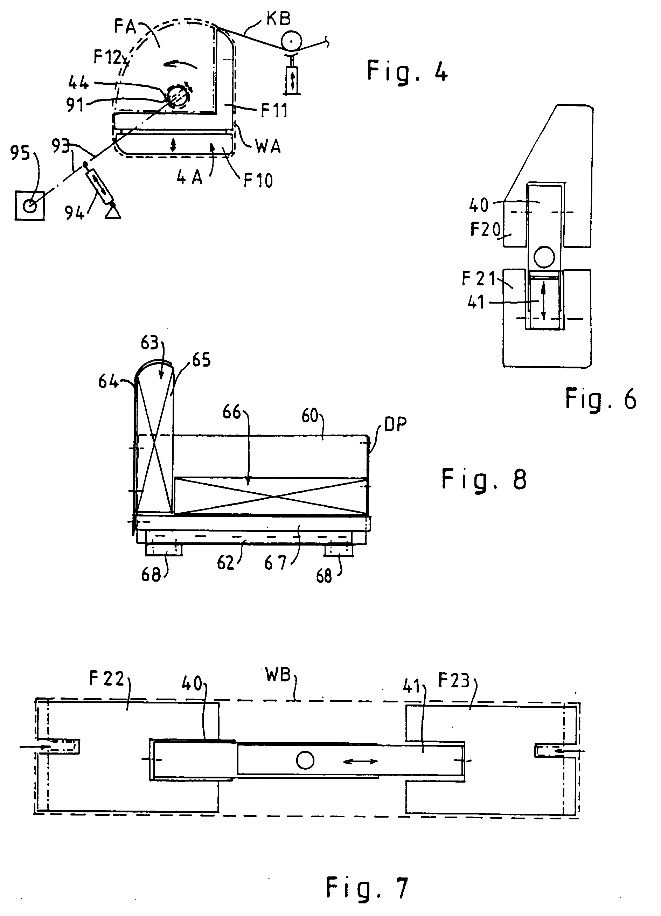

Fig. 4 zeigt eine weitere Wickelkernausführung (4A). Diese enthält von seitlichen Flanschen getragen neben expandierenden Formteilen (F10, F11) einen Ausschnitt (FA), in dem ein expandierbarer Stützkörper (F12) angeordnet ist. Der Gesamtumfang, den der Wickel (W) durch die Formteile (F10, F11) und den Stützkörper (F12) erhält, entspricht dem Umfang des fertigen Laminatteiles.

Fig. 5 zeigt eine Pressenausführung (5A) mit einem eingelegten Pressenkern (4B) und dem Wickel (WA). Die hydraulischen oder pneumatischen Stempel (50 bis 55) sind zu zwei Seiten und in Richtung des Ausschnittes (FA) angeordnet. Dort ist ein Formteil (F13) am Druckstempel (55) gelenkig angebracht, der in den Ausschnitt (FA) paßt und betätigt den Wickel (WA) demgemäß eindrückt und konkav verformt.

Fig. 6 zeigt eine weitere Wickelkernbestückung mit einem rechteckigen und einem trapezförmigen Formstück (F20, 21). Hierauf läßt sich ein Armlehnenprofilteil wickeln.

Fig. 7 zeigt eine Pressenkernbestückung mit zwei langen Rechteckformstücken (F22, F23). Hierauf läßt sich ein Bettkasten mit einem Liegekasten formen, und längsseitig sowie stirnseitig einpressen. Der fertig gepreßte Wickel (WB) wird längs seiner Schmalseiten aufgesägt und dann entformt. Eine hohe Verstellbarkeit der Kernstücke ermöglicht mit einer anderen Formteilbestückung in Längsrichtung eine Profilierung der Schmalseiten, die bei zusammengezogenen Kernstücken (40, 41) entformbar sind.

Fig. 8 zeigt ein Polstersitzmöbel im Vertikalschnitt durch seine Mittelebene. Die Armlehne (60) besteht aus einem gewickelten Profil, wie Fig. 2 und 3 zeigen. Stirnseitig ist eine Verschlußplatte (DP) aufgeleimt und angeklammert. Zur Sitzfläche hin sind Stützleisten (62) angeklammert. Die Rückenlehne (63) besteht aus einem flachen Wickelprofil mit gerundeten Schmalseiten, das symmetrisch jeweils neben der Rundung getrennt ist, so daß die eine Hälfte die Lehnenstützen (64) bildet, auf die ein Schaumstoffpolster (65) aufgelegt ist. Der Sitz (66) besteht aus einem schmalseitig getrennten Flachwickelteil (67) mit einer Polsterauflage. Das gesamte Möbelstück ist mit einem Polsterbezug mit eingestepptem Polstervlies bezogen, was nicht dargestellt ist. Unter den Armlehnen-Seitenteilen (60) sind Füße (68) angebracht.

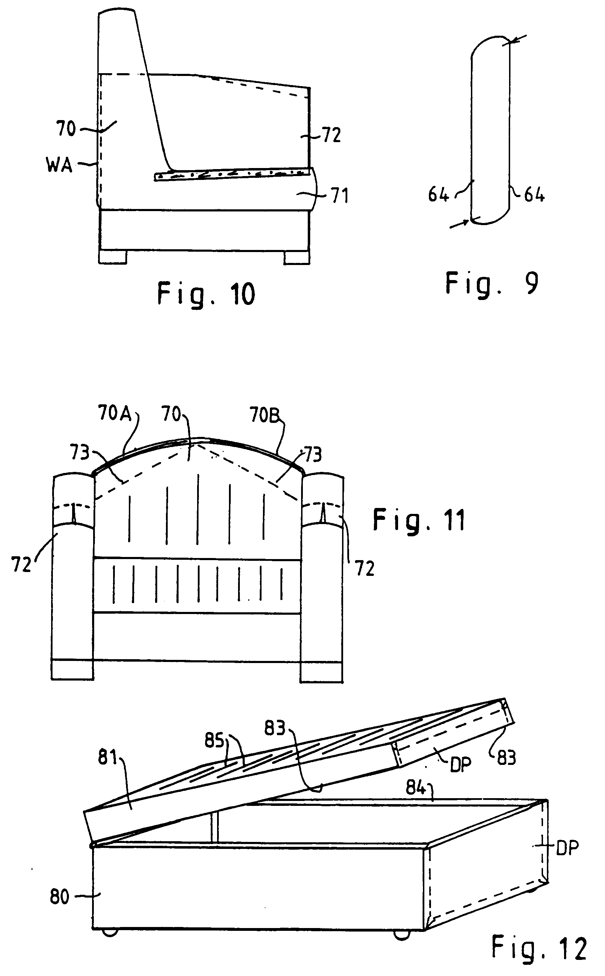

Den Rohlingwickel der Rückenlehnenstütze (64) vor dem Auftrennen zeigt Fig. 9.

Fig. 10 zeigt ein Polstermöbel zweiter Art ohne seinen Bezug im Zentralschnitt. Der konkav geformte Wickel (WA) bildet die Lehne (70) und den Sitz (71). Die Armlehne (72) ist aus einem tunnelförmigen Wickel gebildet. Dieser ist stirnseitig verschlossen.

Fig. 11 zeigt ein Polstersitzmöbel zweiter Art schräg von oben von vorn ohne Bezug. Die Rückenlehne (70) ist an den Schulterpartien (70A, 70B) abgesenkt, indem von oben Falten (73) dort eingepreßt sind. Der Sitz (71) weist eine lattenförmige Trennung der oberen Wickelseite auf.

Fig. 12 zeigt den Grundkörper eines Liegemöbels, das auf einem Wickelkern gem. Fig. 7 hergestellt ist. Die Längsseiten des Wickels sind aufgetrennt. Der eine Abschnitt (80) dient als Bettkasten und der zweite Abschnitt (81) ist der Liegestützkörper in U-Form, der das Polster (82) aufnimmt. Der Bettkasten (80) hat unterhalb des Innenrandes einen eingekanteten umlaufenden Versteifungs- und Tragkragen (84), auf der der Liegekörper (81) mit seinem Kragen (83) ruht. An einer Seite ist er vorzugsweise scharnierartig mit dem Bettkasten (80) verbunden. Stirnseitig sind die U-Profilteile mit Deckplatten (DP) verleimt und verklammert verschlossen. Die Kastenform erbringt bei geringem Gewicht eine hohe Tragfähigkeit und Biegesteifigkeit des Laminats. Es ist auch möglich, in Querrichtung Wellen, Falten oder/und Einschnitte (85) in die Liegestützfläche einzupressen bzw. einzusägen, um ein jeweils gefordertes Elastizitätsprofil herzustellen.

Aus den Formkörpern lassen sich bei geeigneter Wickelquerschnittwahl auch Regalteile, Tischgestelle, Tischplatten usw. herstellen. Statt eines Polsterbezuges ist dann zweckmäßig eine übliche Oberflächenbeschichtung oder eine sofortige Umwickelung mit einer Dekorfolie oder einem Furnier zum Ende des Wickelvorganges vorzusehen. Hierzu eignen sich besonders mit Klebemittel vorbeschichtete Auflagen.

## Patentansprüche

1. Verfahren zum Herstellen von Möbel und Möbelteilen, bei dem Karton (K) oder kartonartiger Faserstoff mit Kaltleim (LE) beschichtet übereinandergeschichtet zu einem Laminat-Formkörper eines Möbelstückes durch Pressen (PR) verbunden und ausgehärtet wird, dadurch gekennzeichnet, daß der Karton (K) als eine Kartonbahn (KB) nach dem Leimauftragen (LA) zu einem hohlen Wickel (W, WA) um einen Wickelkern (4) gewickelt und anschließend zwischen inneren und äußeren Formkörpern (F1 - F4; F5 - F8) in einem Preßschritt (PR) formgepreßt wird, wonach eine Entformung mit einer Entkernung (EK) mit anschließendem Aushärten (AH) erfolgt.

2. Verfahren nach Anspruch 1, dadurch gekennzeichnet, daß beim Preßschritt (PR) ein Perforieren (PF), Faltenpressen und/oder ein Bestücken (BS) des Wickels (W, WA) mit Ankern, Dübel, Schraubeinsätzen od. dgl. erfolgt.

3. Verfahren nach Anspruch 1 oder 2, dadurch gekennzeichnet, daß vor dem Aushärten (AH) ein Einsetzen (ES) von Streben (ST) sowie deren Anschießen mit Klammern erfolgt.

4. Verfahren nach einem der vorstehenden Ansprüche, dadurch gekennzeichnet, daß vor dem Aushärten (AH) ein Verleimen (LV) und Anschießen von Deckplatten (DP) auf die stirnseitigen Wickelöffnungen erfolgt.

5. Verfahren nach einem der vorstehenden Ansprüche, dadurch gekennzeichnet, daß der Wickel (W) in mehrere Teile (W1, W2) in einem Trennschritt (TS) parallel zur Wickelachse zerteilt wird und/oder spaltbildende Zuschnitte in ihn eingebracht werden.

6. Vorrichtung zur Durchführung des Verfahrens nach einem der vorstehenden Ansprüche, dadurch gekennzeichnet, daß die Kartonbahn (KB) von einer Vorratsrolle (R) abgezogen wird, der ein Bahnspanner (1) nachgeordnet ist, der über eine Druckluftzylinderanordnung (10) eine Vorratsschleife bildet und über eine Vorratsschleifenabtastung den Vorratsrollenantrieb steuert, und daß dem Bahnspanner (1) Umlenkrollen (11 - 15) nachgeordnet sind, von denen die erste und die letzte jeweils mit einer steuerbaren Halteleiste (21, 25) zusammenarbeiten, und daß zwischen zwei der Umlenkrollen (14, 15) eine Leimauftragwalze (3) angeordnet ist, und daß mindestens eine der Umlenkrollen, die der Leimauftragwalze (3) benachbart liegt, mit einer steuerbaren Abhebevorrichtung (33) verbunden ist, die betätigt die Kartonbahn (KB) von der Leimauftragwalze (3) abhebt und sonst kontaktieren läßt, und daß der letzten der Umlenkrollen (15) ein Wickler mit einem Wickelkernantrieb (42) und einem lösbaren Wickelkern (4) nachgeordnet ist, der aus gegeneinander begrenzt verschieblichen Kernstücken (40, 41) besteht.

7. Vorrichtung nach Anspruch 6, dadurch gekennzeichnet, daß die Leimauftragwalze (3) mit einem Walzenantrieb (32) verbunden ist, der die Walzenoberfläche in der Richtung und Geschwindigkeit der Kartonbahn (KB) jeweils entsprechend steuert oder mit einer vorgegebenen Mindestgeschwindigkeit über einen Freilauf angetrieben ist.

8. Vorrichtung nach Anspruch 6 oder 7, dadurch gekennzeichnet, daß die Leimauftragwalze (3) mit ihrem unteren Bereich in ein Leimbad (30) mit gesteuerter Tiefe eintaucht.

9. Vorrichtung nach Anspruch 8, dadurch gekennzeichnet, daß das Leimbad (30) auf einer steuerbaren Hubvorrichtung (35) angeordnet ist.

10. Vorrichtung nach Anspruch 6, dadurch gekennzeichnet, daß die Kernstücke (40, 41) pneumatisch oder hydraulisch gesteuert auseinanderzupressen und zusammenziehbar sind.

11. Vorrichtung nach Anspruch 6, dadurch gekennzeichnet, daß die Kernstücke (40, 41) mit austauschbaren Formteilen (F1 - F4) besetzt sind, deren außenliegenden Konturen die Innenkontur des Wickels (W) bilden.

12. Vorrichtung nach Anspruch 11, dadurch gekennzeichnet, daß zwischen den Formteilen (F10, F11) ein Ausschnitt (FA) belassen ist, in dem ein expandierbarer und kontrahierbarer Stützkörper (F12) angeordnet ist.

13. Vorrichtung nach einem der Ansprüche 6 bis 12, dadurch gekennzeichnet, daß vor dem Wickelkern (4) ein Schneidwerkträger mit einem Querschneider (45) und/oder steuerbaren längsteilenden Kerbmessern (47) angeordnet ist und ggf. an dem Schneidwerkträger Saugnäpfe (46) oberhalb der Kartonbahn (KB) angeordnet sind.

14. Vorrichtung nach einem der Ansprüche 6 - 13, dadurch gekennzeichnet, daß der Wickelkern (4) an Schwenkarmen (93) um eine Schwenkachse (92) mit einem Schwenkantrieb (94) gehalten ist, der beim Wickeln einen geregelt annähernd konstanten Zug auf die Kartonbahn (KB) ausübt.

15. Vorrichtung nach einem der Ansprüche 6 bis 14, dadurch gekennzeichnet, daß an dem Wickelkern (4) einstellbare Steuernocken (48) angeordnet sind, die in Verbindung mit einem Zählwerk (49) den Querschneider (45), die Saugnäpfe (46), die Halteleisten (21, 25) und die Abhebevorrichtung (33) sowie die Stillsetzung des Wickelkerns (4) steuern.

16. Vorrichtung nach Anspruch 6, dadurch gekennzeichnet, daß dem Wickler eine Presse (5) nachgeordnet ist, die eine Zentrallagerung (57) enthält, in die ein Preßkern (4B) oder der Wickelkern (4) mit dem Wickel (W) einsetzbar ist, um den an mehreren Seiten steuerbare Druckzylinder (50 - 56) angeordnet sind, die jeweils mit Formteilen (F5 - F8) bestückbar sind, deren zum Wickel (W) gerichtete Formflächen einer vorgegebenen Wickelform entsprechen, die im wesentlichen komplementär zur Außenform der inneren Formteile (F1 - F4) ist, und daß an der Presse (5) ein Druckmittelanschluß (58) für den Preßkern (4B) oder den Wickelkern (4) zur Betätigung und Entspannung der Kernstücke (40, 41) und/oder des Stützkörpers (F12) angeordnet ist.

17. Vorrichtung nach Anspruch 16, dadurch gekennzeichnet, daß an mindestens einem der Druckzylinder (55) das Formteil (13) gelenkig befestigt ist.

18. Vorrichtung nach Anspruch 16 oder 17, dadurch gekennzeichnet, daß zwischen dem Wickelantrieb (42) und der Zentrallagerung (57) eine Transportvorrichtung für mindestens einen Wickelkern (4) oder Wickel (W) angeordnet ist.

19. Vorrichtung nach Anspruch 18, dadurch gekennzeichnet, daß zwischen dem Wickelantrieb (42) und der Zentrallagerung (57) eine Zwischenhalterung für einen zweiten Wickelkern (4) angeordnet ist, so daß die Transportvorrichtung gesteuert einen bewickelten Wickelkern in die Presse (5) verbringt und dann einen leeren Wickelkern aus der Zwischenhalterung in den Wickelantrieb (42) verbringt und nach dem Pressen und Entkernen den anderen Wickelantrieb in die Zwischenhalterung verbringt.

20. Vorrichtung nach einem der Ansprüche 6 bis 19, dadurch gekennzeichnet, daß der Wickelkern (4) an einer Seite in einem Doppellager (92) freitragend gelagert ist und andererseits ein verschieb- oder verschwenkbares, lösbares Lager (91) aufweist.

21. Vorrichtung nach Anspruch 20, dadurch gekennzeichnet, daß an dem Wickelkern (4) eine Wickelabzugsvorrichtung (90) angeordnet ist, die gesteuert den fertigen Wickel (W) bei gelöstem und abgeschwenktem Lager (91) nach einem Expandieren und Kontrahieren der Kernstücke (40, 41) abzieht, worauf das Lager (91) wieder angeschwenkt und angeschlossen wird.

22. Möbelstück mit mindestens einem Möbelteil aus einem verleimten Karton- oder Faserstofflaminat, hergestellt nach einem der vorstehenden Verfahrensansprüche, dadurch gekennzeichnet, daß das Möbelteil aus einem Wickel (W, WA) oder einem Wickelabschnitt (W1, W2) besteht.

23. Möbelstück nach Anspruch 22, dadurch gekennzeichnet, daß der Wickel (W) eine tunnelförmige Armlehne (60) bildet, die stirnseitig mit einer Platte (DP) verleimt und/oder verklammert ist.

24. Möbelstück nach Anspruch 22, dadurch gekennzeichnet, daß der Wickel (W) flach mit gerundeten Schmalseiten ausgebildet ist und achsparallel geteilt ist, so daß zwei Rückenlehnenschalen (64) daraus gebildet sind, deren Innenbereich mit einem Polster (65) ausgelegt ist.

25. Möbelstück nach Anspruch 23 oder 24, dadurch gekennzeichnet, daß der Wickel (W) an mindestens einem Endbereich (70A, 70B) der Schmalseite faltenartig eingepreßt ist, so daß die Lehne (70) endseitig abgesenkt ausgebildet ist.

26. Möbelstück nach Anspruch 22, dadurch gekennzeichnet, daß der Wickel (WA) konkav, eine Lehne (70) und einen Sitz (71) bildend eingepreßt ist.

27. Möbelstück nach Anspruch 26, dadurch gekennzeichnet, daß die Sitzfläche des Sitzes (71) eine Loch- oder Schlitzprägung und/oder eine lattenartige Struktur bildend eingesägt ist.

28. Möbelstück nach Anspruch 22, dadurch gekennzeichnet, daß der Wickel (W) längsseitig und/oder stirnseitig abgekantet gepreßt ist.

29. Möbelstück nach Anspruch 22 oder 28, dadurch gekennzeichnet, daß der Wickel (W) etwa rechteckförmig ausgebildet und längsseitig aufgetrennt ist und die Wickelabschnitte einen Bettkasten (80) und/oder einen Liegekörper (81) bilden.

30. Möbelstück nach Anspruch 29, dadurch gekennzeichnet, daß der Liegekörper (81) gelocht und/oder geschlitzt geprägt oder gesägt ist.

31. Möbelstück nach einem der vorstehenden Ansprüche, dadurch gekennzeichnet, daß die Möbelteile einzeln oder zu einem Möbelstück verbunden, ggf. mit einer Polsterung und einem Dekor- oder Polsterstoffbezug versehen sind.

32. Möbelstück nach Anspruch 22, dadurch gekennzeichnet, daß es mit einer Dekorfolie oder einem Furnier beschichtet ist.

33. Möbelstück nach Anspruch 22, dadurch gekennzeichnet, daß es aus Karton aus recycleten Papier- oder Pappematerialien besteht, dessen Flächengewicht 300 bis 350 g/m² beträgt.

34. Möbelstück nach Anspruch 23, dadurch gekennzeichnet, daß der Wickel (W, WA) eine Lagenzahl von 10 bis 16 Kartonschichten aufweist.

## Claims

1. Process for manufacturing furniture and furniture parts, wherein cardboard (K) or cardboard-like fibrous material coated with cold glue (LE) and arranged in layers one above the other is connected by pressing (PR) and hardened to form the laminate moulded body of a piece of furniture, characterised in that the cardboard (K) is coiled, in the form of a cardboard web (KB), round a coiling core (4), after the application of glue (LA), to form a hollow coil (W, WA) and then compression-moulded between inner and outer moulding bodies (F1 - F4; F5 - F8) in a pressing step (PR), after which removal from the mould together with removal from the core (EK) takes place, with subsequent hardening (AH).

2. Process according to claim 1, characterised in that perforation (PF), fold-pressing and/or the equipping (BS) of the coil (W,WA) with anchors, dowels, screw inserts or the like takes place during the pressing step (PR).

3. Process according to claim 1 or 2, characterised in that the insertion (ES) of struts (ST) and also the tacking-on thereof with staples takes place before the hardening operation (AH).

4. Process according to one of the preceding claims, characterised in that the gluing (LV) and tacking-on of cover plates (DP) onto the end-face openings of the coil takes place before the hardening operation (AH).

5. Process according to one of the preceding claims, characterised in that the coil (W) is divided up into a number of parts (W1, W2) in a separating step (TS) parallel to the axis of the coil, and/or gap-forming blanks are introduced into the said coil.

6. Device for carrying out the process according to one of the preceding claims, characterised in that the cardboard web (KB) is drawn off from a storage roller (R), after which is disposed a web-tensioner (1) which forms a storage loop via a compressed air cylinder arrangement (10) and controls the storage roller drive via a storage loop-scanning system, and that there are disposed, after the web-tensioner (1), deflecting rollers (11 - 15), the first and last of which interact with a controllable holding strip (21, 25) in each case, and that a glue-applying roll (3) is disposed between two of the deflecting rollers (14, 15), and that at least one of the deflecting rollers, which lies adjacent to the glue-applying roll (3), is connected to a controllable lifting-off device (33) which, when actuated, lifts off the cardboard web (KB) from the glue-applying roll (3) but otherwise allows it to make contact, and that there is disposed, after the last of the deflecting rollers (15), a coiler with a coiling core drive (42) and a detachable coiling core (4) which consists of core pieces (40, 41) which are displaceable in a limited manner in relation to one another.

7. Device according to claim 6, characterised in that the glue-applying roll (3) is connected to a roll drive (32) which controls the surface of the roll in the same direction and at the same speed as the cardboard web (KB) in the appropriate manner at any given time, or is driven at a predetermined minimum speed via a freewheel.

8. Device according to claim 6 or 7, characterised in that the glue-applying roll (3) dips, by its lower region, into a glue bath (30) with a controlled depth.

9. Device according to claim 8, characterised in that the glue bath (30) is disposed on a controllable lifting device (35).

10. Device according to claim 6, characterised in that the core pieces (40, 41) can be pressed apart from one another and drawn together in a pneumatically or hydraulically controlled manner.

11. Device according to claim 6, characterised in that the core pieces (40, 41) are edged with exchangeable moulding parts (F1 - F4), the external contours of which form the inner contour of the coil (W).

12. Device according to claim 11, characterised in that a cut-out portion (FA), in which an expandable and contractible supporting body (F12) is disposed, is left between the moulding parts (F10, F11).

13. Device according to one of claims 6 to 12, characterised in that a cutting mechanism carrier with a transverse cutter (45) and/or controllable, longitudinally dividing serrated knives (47) is disposed in front of of the coiling core (4), and suction cups (46) are disposed above the cardboard web (KB), optionally on the cutting mechanism carrier.

14. Device according to one of claims 6 to 13, characterised in that the coiling core (4) is held on pivoting arms (93) about a pivoting spindle (92) with a pivoting drive (94) which exerts a pull, which is approximately constant in a regulated manner, upon the cardboard web (KB) during coiling.

15. Device according to one of claims 6 to 14, characterised in that there are disposed on the coiling core (4) adjustable control cams (48) which, in conjunction with a counter (49), control the transverse cutter (45), the suction cups (46) the holding strips (21, 25) and the lifting-off device (33), and also the arresting of the coiling core (4).

16. Device according to claim 6, characterised in that there is disposed, after the coiler, the coiler a press (5) which contains a central mounting (57) into which there can be inserted a pressing core (4B) or the coiling core (4) with the coil (W), around which there are disposed, on a number of sides, controllable pressure cylinders (50 - 56) which can be equipped with moulding parts (F5 - F8) in each case, of which those moulding faces which are directed towards the coil (W) correspond to a predetermined coil shape which is essentially complementary to the outer shape of the inner moulding parts (F1 - F4), and that a pressure medium connection (58) for the pressing core (4B) or the coiling core (4) is disposed on the press (5) for the purpose of actuating and unclamping the core pieces (40, 41) and/or the supporting body (F12).

17. Device according to claim 16, characterised in that the moulding part (13) is fastened in an articulated manner to at least one of the pressure cylinders (55).

18. Device according to claim 16 or 17, characterised in that a transporting device for at least one coiling core (4) or coil (W) is disposed between the coiling drive (42) and the central mounting (57).

19. Device according to claim 18, characterised in that an intermediate holding system for a second coiling core (4) is disposed between the coiling drive (42) and the central mounting (57), so that the transporting device brings a coiled coiling core into the press (5) in a controlled manner and then brings an empty coiling core out of the intermediate holding system and into the coiling drive (42) and, after pressing and removal from the core, brings the other coiling drive into the intermediate holding system.

20. Device according to one of claims 6 to 19, characterised in that the coiling core (4) is mounted on one side in a double bearing (92) in a cantilevered manner and has, on the other side, a displaceable or pivotable detachable bearing (91).

21. Device according to claim 20, characterised in that there is disposed on the coiling core (4) a coil draw-off device (90) which draws off the finished coil (W) in a controlled manner, with the bearing (91) detached and pivoted away, after an expansion and contraction of the core pieces (40, 41), whereupon the bearing (91) is once again pivoted on and connected.

22. Piece of furniture having at least one furniture part made of a glued cardboard or fibrous material laminate manufactured according to one of the preceding process claims, characterised in that the furniture part consists of a coil (W, WA) or of a coil section (W1, W2).

23. Piece of furniture according to claim 22, characterised in that the coil (W) forms a tunnel-shaped armrest (60) which is glued and/or stapled, at the end face, to a plate (DP).

24. Piece of furniture according to claim 22, characterised in that the coil (W) is of flat construction with rounded narrow sides and is divided in an axially parallel manner, so that two backrest shells (64), the inner region of which is designed with upholstery (65), are formed therefrom.

25. Piece of furniture according to claim 23 or 24, characterised in that the coil (W) is pressed in, after the fashion of a fold, at at least one end region (70A, 70B) of the narrow side, so that the rest (70) is constructed so as to be lowered at the end.

26. Piece of furniture according to claim 22, characterised in that the coil (WA) is pressed in in a concave manner so as to form a rest (70) and a seat (71).

27. Piece of furniture according to claim 26, characterised in that the seating face of the seat (71) is sawn in so as to form a hole-type or slot-type imprint and/or a lattice-like structure.

28. Piece of furniture according to claim 22, characterised in that the coil (W) is pressed so as to be bevelled at the longitudinal side and/or end face.

29. Piece of furniture according to claim 22 or 28, characterised in that the coil (W) is of approximately rectangular construction and is cut open at its longitudinal side and the coil sections form a bedding box (80) and/or a couch body (81).

30. Piece of furniture according to claim 29, characterised in that the couch body (81) is imprinted or sawn in a holed and/or slotted manner.

31. Piece of furniture according to one of the preceding claims, characterised in that the furniture parts are connected individually or to form a piece of furniture, optionally with upholstery and a decorative or upholstery material cover.

32. Piece of furniture according to claim 22, characterised in that it is coated with a decorative foil or a veneer.

33. Piece of furniture according to claim 22, characterised in that it consists of cardboard made of recycled paper materials or board materials, the weight per unit area of which amounts to 300 to 350 g/m².

34. Piece of furniture according to claim 23, characterised in that the coil (W, WA) has a number of plies of from 10 to 16 layers of cardboard.

## Revendications

1. Procédé de fabrication de meubles et d'éléments de meubles dans la cadre duquel du carton (K) ou une matière fibreuse genre carton enduit/e de colle à froid (LE) est disposé/e en couches superposées pour former, par pression (PR) le corps stratifié d'un meuble et est durci,
caractérisé en ce que
le carton (K), en forme de bande de carton (KB), est enroulé, après l'application de colle (LA), pour former une pièce creuse (W, WA), entourée autour d'un noyau (4) et est, ensuite, moulé par compression, entre des corps de moulage intérieurs et extérieurs (F1 - F4; F5 - F8), au cours d'une phase de moulage par compression (PR), ce après quoi il est extrait et débarrassé de son noyau au cours d'une phase d'extraction et de dénoyautage (EK) suivie d'un durcissement (AH).

2. Procédé selon la revendication 1,
caractérisé en ce que,
lors de la phase de moulage par compression (PR), la pièce enrouléee (W, WA) subit une perforation (PF), un pliage par compression et/ou un équipement (BS) avec des éléments d'ancrage, des chevilles, des vis ou pièces analogues.

3. Procédé selon la revendication 1 ou 2,
caractérisé en ce que
des étais (ST) sont mis en place, avant le durcissement (AH) au cours d'une phase de mise en place (ES) et fixés avec des agraffes.

4. Procédé selon l'une des revendications précédentes,
caractérisé en ce que
un encollage (LV) et une fixation de plaques de couverture (DP) sur les ouvertures frontales de la pièce enroulée ont lieu avant le durcissement (AH).

5. Procédé selon l'une des revendications précédentes,
caractérisé en ce que
la pièce enroulée (W) est divisée en plusieurs morceaux (W1, W2), parallèlement à l'axe d'enroulement, au cours d'une phase de tronçonnage (TS) et/ou pourvu de découpes formant des fentes.

6. Dispositif pour l'exécution du procédé selon l'une des revendications précédentes,
caractérisé en ce que
la bande de carton (BK) est tirée d'un rouleau d'approvisionnement (R), en aval duquel un tendeur de bande (1) est disposé, lequel tendeur de bande (1) forme une boucle d'approvisionnement par l'intermédiaire d'un cylindre à air ciomprimé (10), et commande l'entraînement du rouleau d'approvisionnement par l'intermédiaire d'un détecteur de boucle d'approvisionnement, et que
des rouleaux de déviation (11 à 15) sont disposés en aval du tendeur de bande (1), le premier et le dernier de ces rouleaux de déviation coopérant chacun avec une barre de retenue respective (21 à 25) à commande, et qu'un cylindre encolleur (3) est installée entre deux des rouleaux de déviation (14, 15), et qu'au moins l'un des rouleaux de déviation, voisin du cylindre encolleur (3) est relié à un dispositif de soulèvement (33) à commande qui, actionné, soulève la bande de carton (KB) du cylindre encolleur (3) ou, sinon, le laisse en contact avec ce dernier, et qu'un enrouleur avec entraînement (42) de noyau d'enroulement et un noyau d'enroulement amovible (4) sont disposés en aval du dernier rouleau de déviation (15), le noyau d'enroulement (4) étant composé d'éléments (40, 41) déplaçables par rapport l'un à l'autre, dans une mesure limitée.

7. Dispositif selon la revendication 6,
caractérisé en ce que
le cylindre encolleur (3) est relié à un entraînement (32), qui commande la surface du rouleau adéquatement quant au sens et à la vitesse de la bande de carton, ou est entraîné par course libre à une vitesse minimum prédéterminée.

8. Dispositif selon la revendication 6 ou 7,
caractérisé en ce que
la partie inférieure du cylindre encolleur (3) est plongée dans un bain de colle (30), la profondeur de plongée étant commandée.

9. Dispositif selon la revendication 8,
caractérisé en ce que
le bain de colle (30) est disposé sur un dispositif élévateur (35) à commande.

10. Dispositif selon la revendication 6,
caractérisé en ce que
les éléments de noyau (40, 41) peuvent être éloignés ou rapprochés l'un de l'autre par commande pneumatique ou hydraulique.

11. Dispositif selon la revendication 6,
caractérisé en ce que
les éléments de noyau (40, 41) sont équipés de pièces préformées interchangeables (F1 à F4), dont les contours extérieurs forment le contour intérieur de la pièce enroulée (W).

12. Dispositif selon la revendication 11,
caractérisé en ce que
une entaille (FA) est laissée entre les pièces préformées (F10, F11) et qu'un support (F12) expansible et contractable y est disposé.

13. Dispositif selon l'une des revendications 6 à 12,
caractérisé en ce que
un porte-outils de coupe avec un dispositif de coupe transversale (45) et/ou des couteaux de coupe longitudinale (47) commandés et disposé en amont du noyau d'enroulement (4) et que, le cas échéant, des ventouses (46) sont prévus sur le porte-outils de coupe, au-dessus de la bande de carton (KB).

14. Dispositif selon l'une des revendications 6 à 13,
caractérisé en ce que
le noyau d'enroulement (4) est maintenu à des bras pivotant (93) et autour d'un axe de pivotement (92) avec un entraînement à fraction de tour qui exerce une traction réglée, à peu près constante sur la bande de carton (KB) lors de l'enroulement.

15. Dispositif selon l'une des revendications 6 à 14,
caractérisé en ce que
le noyau d'enroulement (4) est équipé de cames de commande (48) réglables qui, en relation avec un compteur (49), commande le dispositif de coupe transversale (45), les ventouses (46), les barres de retenue (21, 25) et le dispositif élévateur (33) ainsi que l'arrêt du noyau d'enroulement (4).

16. Dispositif selon la revendication 6,
caractérisé en ce que
l'enrouleur est suivi d'une presse (5) qui comprend un logement central (57) dans lequel un noyau de pression (4B) ou le noyau d'enroulement (4) avec pièce enroulée (W) peuvent être mis en place, des cylindres de compression (50 à 56) commandés étant disposés autour, de plusieurs côtés, lesquels sont équipés de membres de forme (F5 à F8), dont les surfaces de formage dirigées vers la pièce enroulée (W) correspondent à une forme prédéterminée sensiblement complémentaire de la forme extérieure des membres de forme intérieurs (F1 à F4)
et que la presse (5) est équipée d'un raccord pour agents comprimés (58) pour le noyau de pression (4B) ou le noyau d'enroulement (4) aux fins de serrage et de desserrage des éléments (40, 41) du noyau et/ou du support (F12).

17. Dispositif selon la revendication 16,
caractérsié en ce que
le préformé (13) est fixé, articulé, à au moins l'un des cylindres de pression (55).

18. Dispositif selon la revendication 16 ou 17,
caractérisé en ce que,
pour, au moins, un noyau d'enroulement (4) ou une pièce enroulée (W), un dispositif de transport st disposé entre l'entraînement d'enroulement (42) et le logement central (57).

19. Dispositif selon la revendication 18,
caractérisé en ce que,
pour un deuxième noyau d'enroulement (4), un support intermédiaire est disposé entre l'entraînement d'enroulement (42) et le logement central (57) de sorte que le dispositif de transport conduise, par commande, dans la presse, un noyau d'enroulement chargé et conduise, ensuite, du support intermédiaire à l'entraînement d'enroulement (42), un noyau d'enroulement vide, puis conduise, après pressage et dénoyautage, conduise l'autre entraînement d'enroulage au support intermédiaire.

20. Dispositif selon l'une des revendications 6 à 19,
caractérisé en ce que
le noyau d'enroulement (4) est logé, d'un côté, dans un double palier (92), non soutenu, et présente, de l'autre côté, un palier (91) desserrable, décalable et pivotant.

21. Dispositif selon la revendication 20,
caractérisé en ce qu'
un dispositif de tirage de pièce d'enroulement (90) est disposé sur le noyau d'enroulement (4) et entraîne la pièce enroulée (W) finie après expansion et contraction des éléments (40, 41) du noyau quand le palier (91) est desserré et pivoté, ce après quoi le palier (91) est de nouveau pivoté et raccordé.

22. Meuble comprenant au moins un élément fabriqué en carton ou en matière fibreuse stratifiée selon le procédé faisant l'objet de l'une des revendications précédentes,
caractérisé en ce que
l'élément de meuble consiste en une pièce enroulée (W, WA) ou un morceau (W1, W2) de pièce enroulée.

23. Meuble selon la revendication 22,
caractérisé en ce que
la pièce enroulée (W) forme un accoudoir (60) en forme de tunnel pourvu frontalement d'une plaque (DP) collée et/ou agraffée.

24. Meuble selon la revendication 22,
caractérisé en ce que
la pièce enroulée (W) est plate avec des côtés étroits arrondis et est divisé parallèlement à l'axe de sorte à former deux coques de dossier (64) dont la zone intérieure est revêtue d'un rembourrage (65).

25. Meuble selon la revendication 23 ou 24,
caractérisé en ce que
la pièce enroulée (W) est pressée en forme de pli, à, au moins, une extrémité (70A, 70B) du côté étroit de sorte que l'extrémité du dossier (70) soit abaissée.

26. Meuble selon la revendication 22,
caractérisé en ce que
la pièce enroulée (WA) est pressée concavement pour former un dossier (70) et un siège (71).

27. Meuble selon la revendication 26,
caractérisé en ce que
la surface du siège (71) présente des perforations ou des fentes matricées et/ou une structure sciée en forme de lattis.

28. Meuble selon la revendication 22,
caractérisé en ce que
la pièce enroulée (W) est pressée pliée longitudinalement et/ou frontalement.

29. Meuble selon la revendication 22 ou 28,
caractérisé en ce que
la pièce enroulée (W) est à peu près rectangulaire et divisée longitudinalement et que ses divisions forment un coffre à litterie (80) et/ou une surface de couchage.

30. Meuble selon la revendication 29,
caractérisé en ce que
la surface de couchage (81) est pourvue de perforations et/ou de fentes matricées ou sciées.

31. Meuble selon l'une des revendications précédentes,
caractérisé en ce que
les éléments sont individuels ou assemblés pour former un meuble, pourvus, le cas échéant, d'un rembourrage et d'un revêtement en tissu d'ameublement ou de décoration.

32. Meuble selon la revendication 22,
caractérisé en ce que
ce meuble est revêtu d'une feuille décorative ou de placage.

33. Meuble selon la revendication 22,
caractérisé en ce que
ce meuble est exécuté en carton, papier ou matières analogues recyclés dont le grammage est de 300 à 350 g/m².

34. Meuble selon la revendication 23,
caractérisé en ce que
la pièce enroulée (W, WA) présente 10 à 16 couches de carton.
